# EUROPEAN PATENT SPECIFICATION

(11) **EP 2 026 928 B1**
(45) Date of publication and mention of the grant of the patent: **29.10.2014**
(21) Application number: 07784392.8
(22) Date of filing: 11.06.2007
(51) Int. Cl.: B23K 9/173

(54) **REPOSITIONABLE ATTACHMENT DEVICE FOR WELDING GUN CONDUCTOR TUBES**
NEUPOSITIONIERBARE BEFESTIGUNGSVORRICHTUNG FÜR SCHWEISSPISTOLENLEITUNGSROHRE
DISPOSITIF DE FIXATION REPOSITIONNABLE POUR SOUDER DES TUBES CONDUCTEURS DE PISTOLETS DE SOUDAGE

(30) Priority: 09.06.2006 US 812415 P
(43) Date of publication of application: 25.02.2009
(73) Proprietor: Tweco Products, Inc., Denton TX 76207 (US)
(72) Inventor: LAYMON, Patrick, A., Denton, TX 76205 (US)
(74) Representative: DREISS Patentanwälte PartG mbB
(86) International application number: PCT/US2007/070880
(87) International publication number: WO 2007/146878

(56) References cited:
- EP-A1- 0 875 708
- JP-A- 08 267 249
- US-A- 5 338 917

## Description

### FIELD

The present disclosure relates to a conductor tube for use in a welding gun as claimed in claim 1. JP 08267249 A discloses a conductor tube of a welding gun.

### BACKGROUND

The statements in this section merely provide background information related to the present disclosure and may not constitute prior art.

In a typical welding gun, and more specifically a MIG welding gun, a conductor tube is secured to the end of a welding gun handle and generally functions to conduct gas and provide a conduit for feeding welding wire from a supply device (e.g., wire feeder) to the end of the conductor tube. The welding wire is fed through an assembly of consumable components that are secured to the end of the conductor tube, including a diffuser, a contact tip, and a nozzle. Generally, the diffuser distributes a shield gas within the nozzle and around the welding wire to provide a shielded weld zone, the contact tip guides the welding wire through to the weld zone and also conducts current to the welding wire, and the nozzle houses the consumable components, delivers the shielding gas, and shields the other consumable components from weld spatter. Operation of a typical MIG welding gun, by way of example, is shown and described in U.S. Patent Nos. 5,491,321 and 5,338,917, which are commonly owned with the present application, and the contents of which are incorporated herein by reference in their entirety.

Conductor tubes are generally provided in a variety of shapes and sizes depending on the welding operation/environment. For example, most conductor tubes are angled, or define a bend, and others define a generally straight shape. Depending on the welding environment, an operator often needs to adjust the length or the angle of the conductor tube. One way of achieving this adjustment is to physically remove the conductor tube, which is most often secured to a welding gun handle with an Allen screw, and replace it with another conductor tube having the desired length and/or bend angle. To reduce this frequency of changing the conductor tube, and thus overall downtime, some known welding guns provide a flexible conductor tube by winding a number of copper wires around a cable assembly. However, these flexible conductors present certain drawbacks. First of all, the copper wires cannot withstand repeated flexing over an extended period of time and often deform or break only after a few days of operation. Secondly, the unlimited degrees of freedom of rotation provided by the copper wires often causes wire feed problems inside the conductor tube when the tube is repeatedly flexed, especially at extreme angles, over an extended period of time.

During use, weld splatter often accumulates onto the exterior surface of the nozzle and a typical operator will tap or hit the end of the nozzle against a hard surface to knock off the splatter if the accumulation begins to affect the quality of the weld. As such, the conductor tube, and often the consumable components, undergo premature failure, and wire feed problems can occur from knocking off the splatter in this manner. Additionally, the position of the conductor tube is often changed when the end of the nozzle is tapped or hit against the hard surface, which causes the operator to interrupt a welding operation to reposition the conductor tube, thus contributing to increased downtime.

### SUMMARY

In another form, a conductor tube for use in a welding gun is provided that comprises at least one of at least one extension and radially spaced receiving portions. The extension and the radially spaced receiving portions are disposed near a proximal end portion of the conductor tube, and the extension and the radially spaced receiving portions of the conductor tube are adapted for rotational engagement with corresponding portions of an adapter such that the conductor tube can be repositioned relative to a handle of the welding gun.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.
FIG. 1 is a side view of a MIG welding torch in accordance with the teachings of the present disclosure;
FIG. 2 is a perspective view of a splined conductor tube assembly constructed in accordance with the teachings of the present disclosure;
FIG. 3 is an exploded perspective view of the splined conductor tube assembly in accordance with the teachings of the present disclosure;
FIG. 4 is a perspective view of a conductor tube having a splined attachment area and constructed in accordance with the teachings of the present disclosure;
FIG. 5 is an enlarged perspective view of an adapter having a splined interface and constructed in accordance with the teachings of the present disclosure;
FIG. 6 is a cross-sectional view of the splined conductor tube assembly in accordance with the teachings of the present disclosure;
FIG. 7 is an enlarged cross-sectional view of an interface of a welding gun having splined elements and constructed in accordance with the teachings of the present disclosure;
FIG. 8 is an enlarged cross-sectional view of a jump liner secured within a diffuser and constructed in accordance with the teachings of the present disclosure;
FIG. 9 is a perspective view of another form of an attachment device for use in connecting a conductor tube to a handle of a welding gun constructed in accordance with the teachings of the present disclosure;
FIG. 10 is a reverse perspective view of FIG. 9 illustrating the alternate attachment device in accordance with the teachings of the present disclosure;
FIG. 11 is an enlarged perspective view of a conductor tube defining extensions and constructed in accordance with the teachings of the present disclosure;
FIG. 12 is an enlarged perspective view of an adapter defining slotted spokes as radially spaced receiving portions and constructed in accordance with the teachings of the present disclosure;
FIG. 13 is a front view of the adapter having slotted spokes in accordance with the teachings of the present disclosure; and
FIG. 14 is a cross-sectional view of the conductor tube disposed within the adapter and the extensions engaging the slotted spokes in accordance with the teachings of the present disclosure.

### DETAILED DESCRIPTION

The following description is merely exemplary in nature and is not intended to limit the present disclosure, application, or uses.

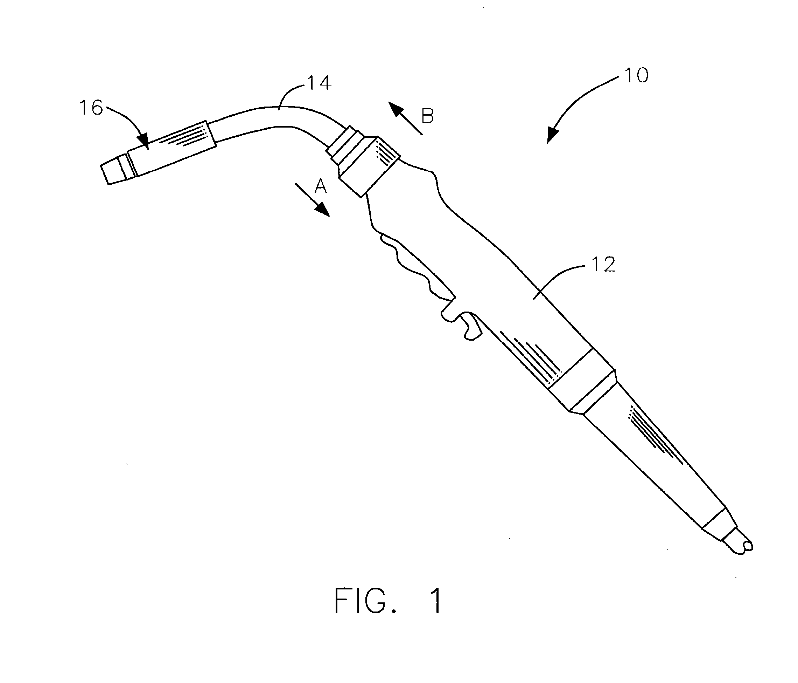

Referring to FIG. 1, a typical MIG welding gun is illustrated and generally indicated by reference numeral 10. The MIG welding gun 10 comprises a welding gun handle 12, a conductor tube 14 secured to the welding gun handle 12, and a set of consumables 16 secured a distal end of the conductor tube 14. The set of consumables 16 generally include a nozzle, a diffuser, and a contact tip (not shown in FIG. 1), the exemplary operation of which are described in greater detail in U.S. Patent Nos. 5,491,321 and 5,338,917, which are commonly owned with the present application, and the contents of which are incorporated herein by reference in their entirety.

In the following, various forms of attachment devices are illustrated and described in which an adapter is disposed proximate the handle 12 of the welding gun 10, and the adapter defines a plurality of radially spaced receiving portions as described in greater detail below. A conductor tube is disposed adjacent the adapter, and the conductor tube defines at least one extension disposed near a proximal end portion of the conductor tube, wherein the plurality of radially spaced receiving portions are adapted for engagement by the extension of the conductor tube such that the conductor tube can be repositioned relative to the handle of the welding gun. The various forms of such an attachment device are now described in greater detail in the following.

### Splined Conductor Tube Assembly

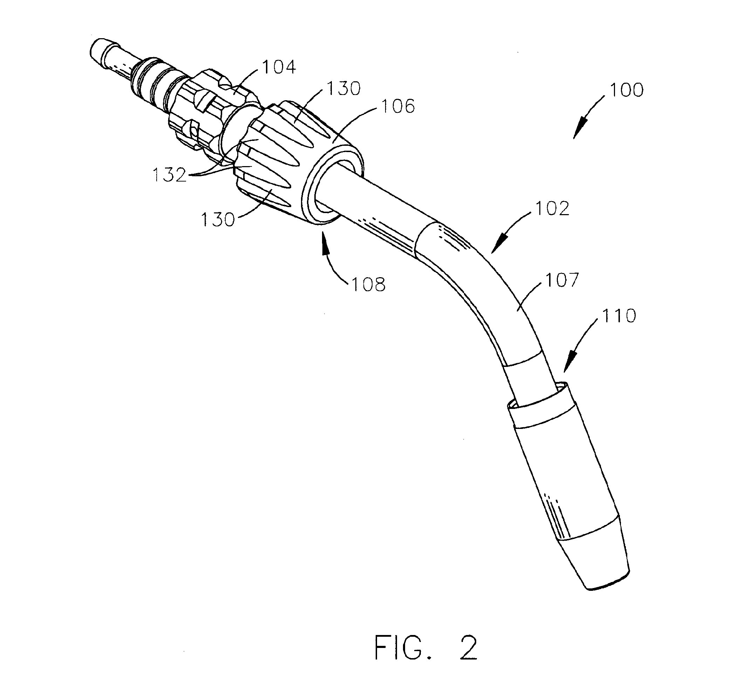

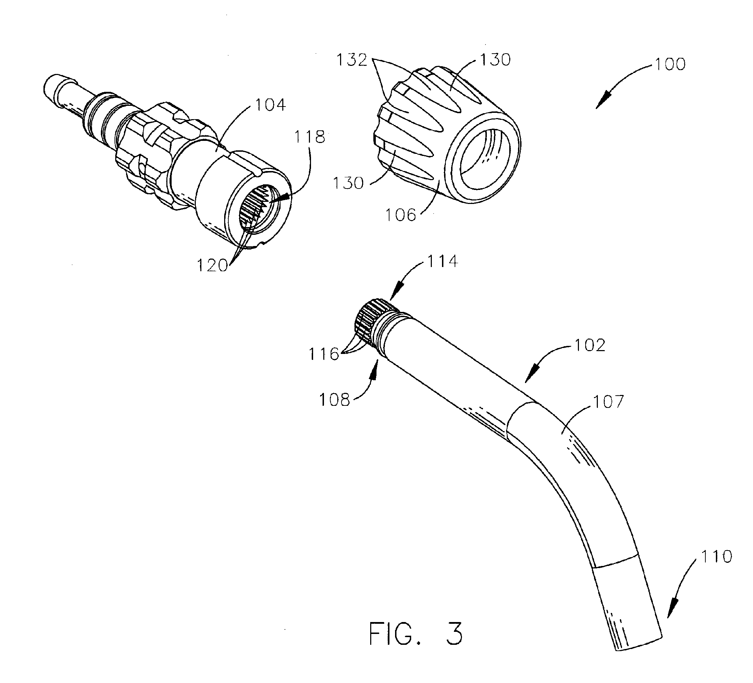

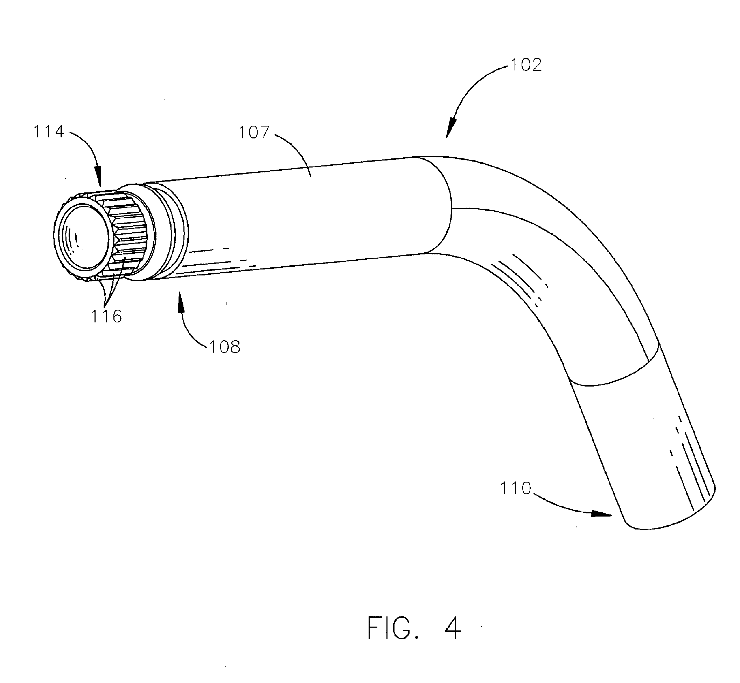

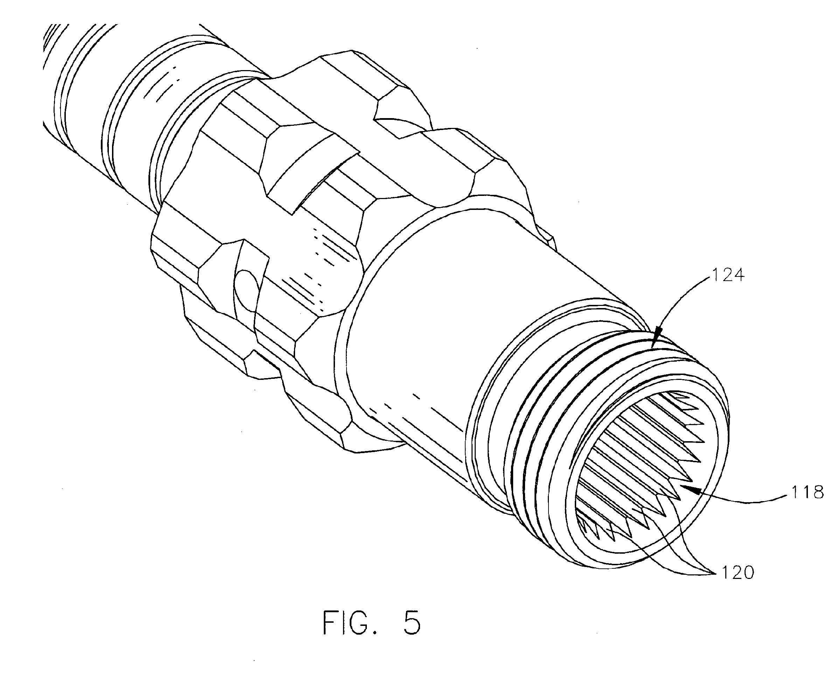

Referring to FIGS. 2-3, a conductor tube assembly is illustrated and generally indicated by reference numeral 100. The conductor tube assembly 100 comprises a conductor tube 102, an adapter 104 that is generally disposed within a welding gun handle (not shown), and a locking collar 106. Referring also to FIGS. 3-6, the conductor tube 102 comprises a body 107 defining a proximal end portion 108 releasably attachable to the welding gun handle and a distal end portion 110 adapted for receiving consumables such as a diffuser 112. A splined attachment area 114 is disposed around the proximal end portion 108 of the conductor tube 102, and more specifically, the splined attachment area 114 defines a plurality of teeth 116 as shown. A corresponding splined interface 118 is disposed around an internal portion of the adapter 104, which defines a plurality of grooves 120 as shown. As such, the plurality of teeth 116 engage the corresponding plurality of grooves 120 to secure the conductor tube 102 to the adapter 104 and thus to the welding gun handle. It should be understood that the splined interface 118 may be reversed, both on and between the adapter 104 and the conductor tube 102, while remaining within the scope of the present disclosure. More specifically, the grooves 120 may be disposed around an external portion of the adapter 104 and the plurality of teeth 116 may be disposed around an internal portion of the conductor tube 102. Conversely, the grooves 120 may be disposed on either an internal or external portion of the conductor tube 102, while the teeth 116 are disposed on either an external or internal portion of the adapter 104. Such variations shall be construed as being within the scope of the present disclosure.

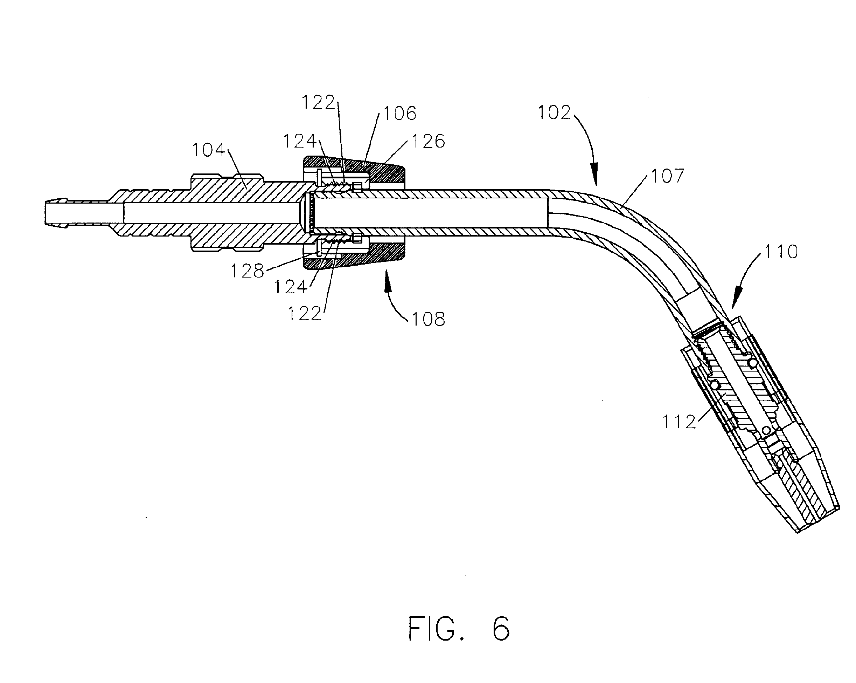

Referring now to FIGS. 6-7, the locking collar 106 is slidably disposed around the conductor tube 102 and defines internal threads 122 that are adapted to engage a corresponding set of external threads 124 disposed around the adapter 104. Preferably, the locking collar 106 comprises an insert 126 that defines the internal threads 122, which is preferably secured within the locking collar 106 by a clip element 128. Additionally, and as best shown in FIGS. 2 and 3, the locking collar 106 preferably defines a tapered configuration as shown and a plurality of external gripping features such as the ridges 130 and grooves 132 for improved ergonomics. Preferably, the locking collar is an elastomeric material such as a polycarbonate, however, other materials may be employed while remaining within the scope of the present disclosure. Additionally, the insert 126 is preferably a brass material.

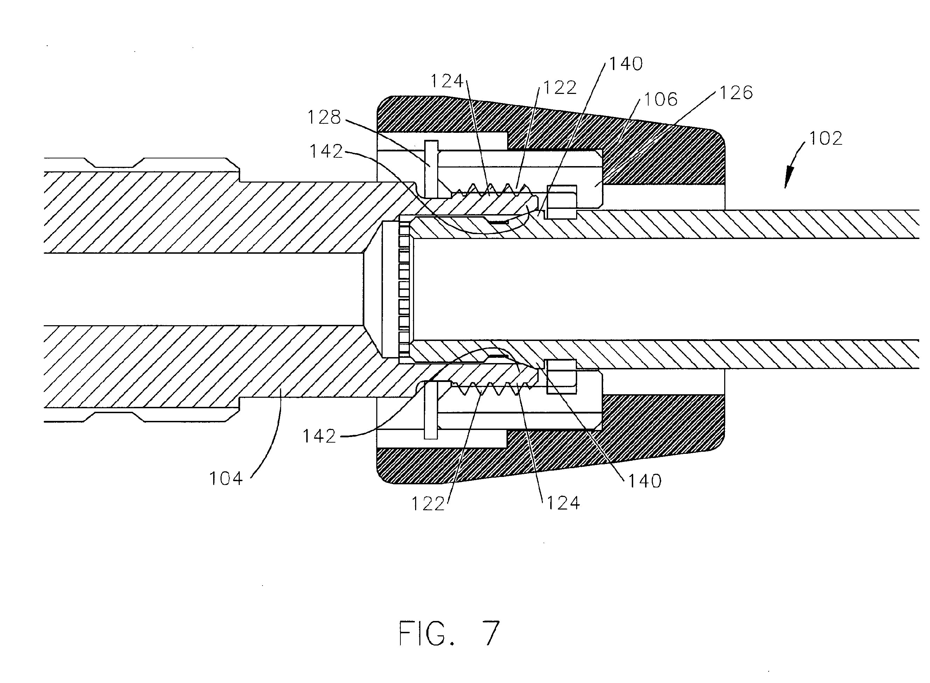

Referring now to FIG. 7, the conductor tube 102 comprises an outwardly extending angled flange 140 that cooperates with an internal bevel 142 of the adapter 104 to seal the interface between the conductor tube 102 and the adapter 104. As the locking collar 106 is tightened onto the adapter 104, the outwardly extending angled flange 140 of the conductor tube 102 progressively engages the internal bevel 142 of the adapter 104 to provide the requisite sealing without the use of an additional sealing component, such as an o-ring by way of example.

During use, if an operator desires to rotate the conductor tube 102 to obtain a different weld angle, the operator simply loosens the locking collar 106, disengages the splined elements, i.e. the teeth 116 of the conductor tube 102 and the grooves 102 of the adapter 104, rotates the conductor tube 102, reengages the splined elements to the desired position, and then secures the locking collar 106 back onto the adapter 104. Since the splined elements are securely interlocked, the present disclosure is advantageous in the instance where an operator is removing weld splatter from the nozzle by tapping or hitting the end of the nozzle against a hard surface. Such hitting will likely not affect the rotational position of the conductor tube 102 and thus the operator can continue welding without interruption.

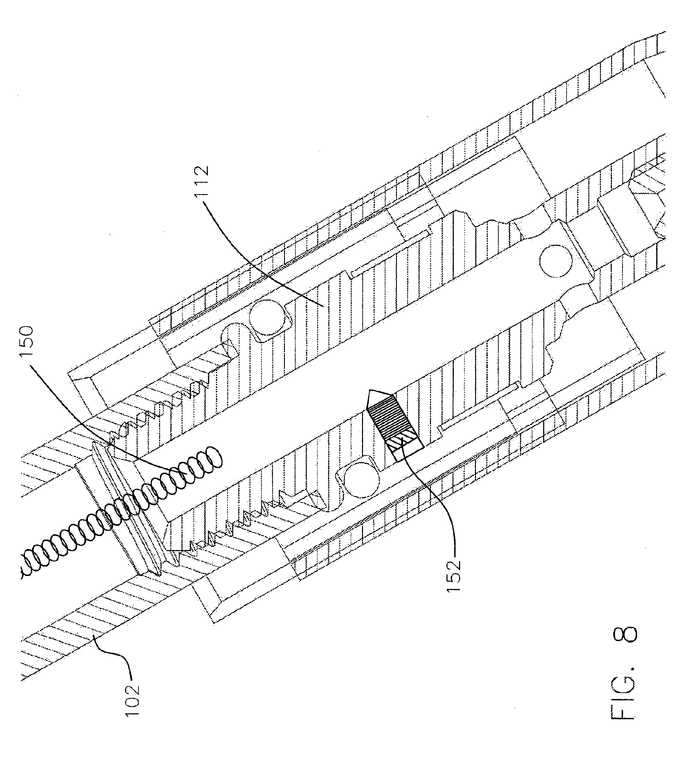

In yet another form of the present disclosure as shown in FIG. 8, a jump liner 150 is disposed within the conductor tube 102 and secured within the diffuser 112. Preferably, the jump liner 150 is secured with a set screw 152 as shown. Accordingly, the jump liner 150 is integral within the conductor tube 102 and thus provides for ease of replacement of different conductor tubes 102 having different geometrical configurations (e.g., bend angle, length) during operation.

### Keyed Conductor Tube Assembly

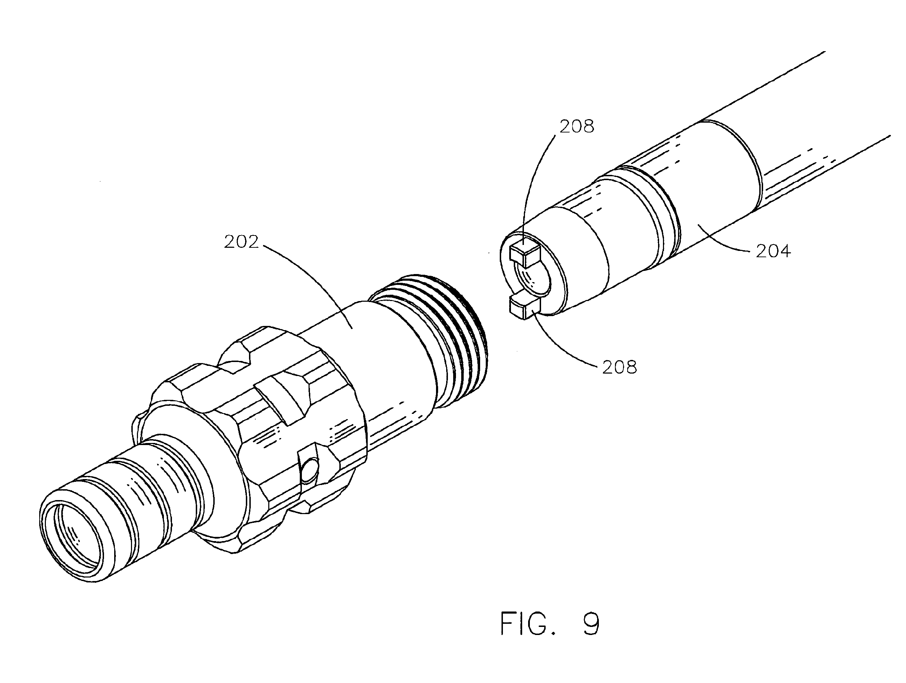

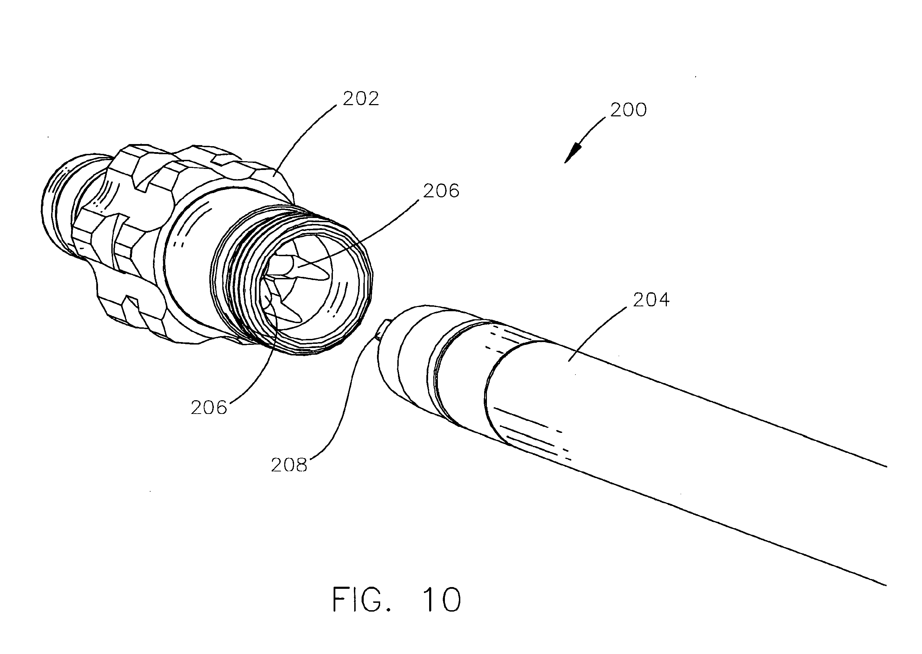

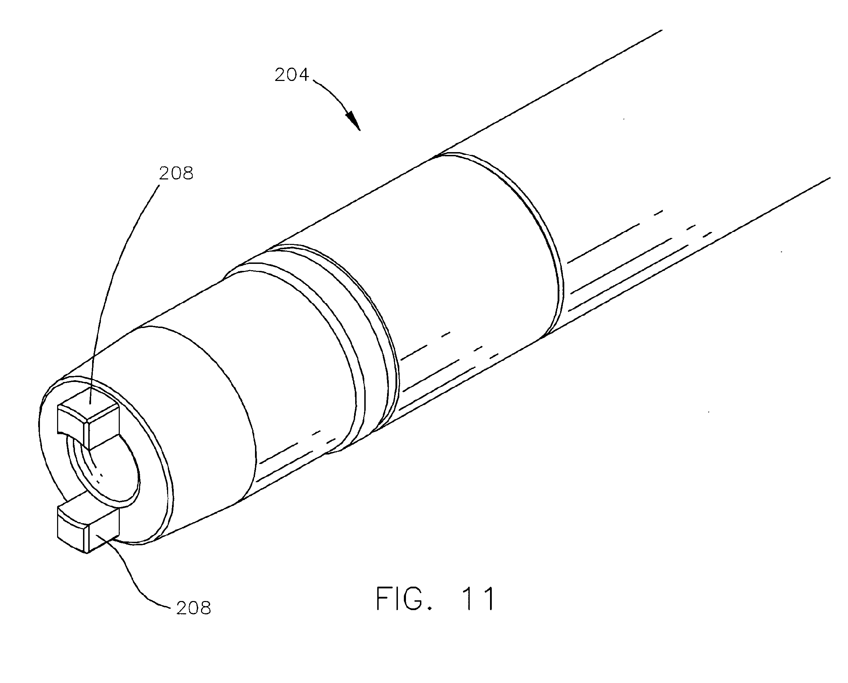

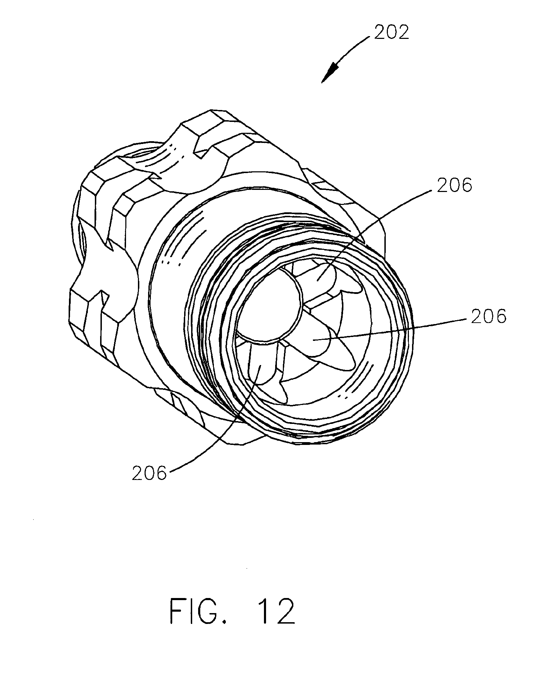

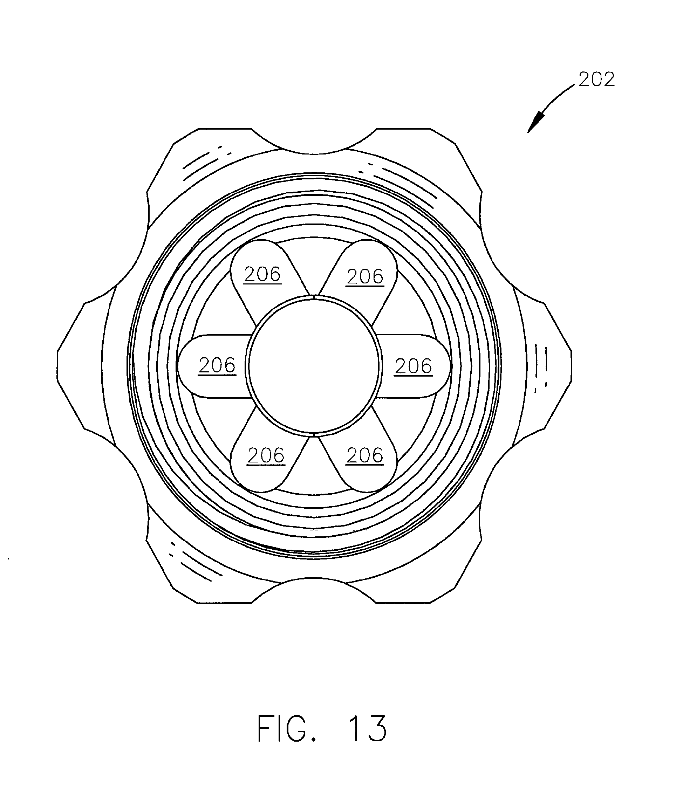

Referring now to FIGS. 9 and 10, yet another form of an attachment device for connecting a conductor tube to a handle of a welding gun is illustrated and generally indicated by reference numeral 200. (Other components of the welding gun 10, such as the handle 12 and the locking collar 106, among others, are not illustrated with this additional, exemplary embodiment for purposes of clarity). The attachment device 200 comprises an adapter 202 that is disposed proximate the handle 12 of the welding gun 10 (not shown), and a conductor tube 204 disposed adjacent the adapter 202. The adapter 202 defines a plurality of radially spaced receiving portions, which in this form are slotted spokes 206 as shown in FIG. 10, and best shown in FIGS. 12-13. The conductor tube 204 defines at least one extension 208 disposed near a proximal end portion 210 of the conductor tube 204, which is also shown in greater detail in FIG. 11. Preferably, two radially opposed extensions 208 are employed on the conductor tube 204, however, it should be understood that at least one or more than two (2) may be employed while remaining within the scope of the present disclosure. The radially opposed extensions 208 are adapted for rotational engagement with the slotted spokes 206 of the adapter 202, as described in greater detail below. As used herein, the term "proximal" should be understood to mean in a direction towards the welding gun handle 12 as shown by arrow A in FIG. 1, and the term "distal" should be understood to mean in a direction away from the welding gun handle, or towards the consumables 16, as shown by arrow B in FIG. 1.

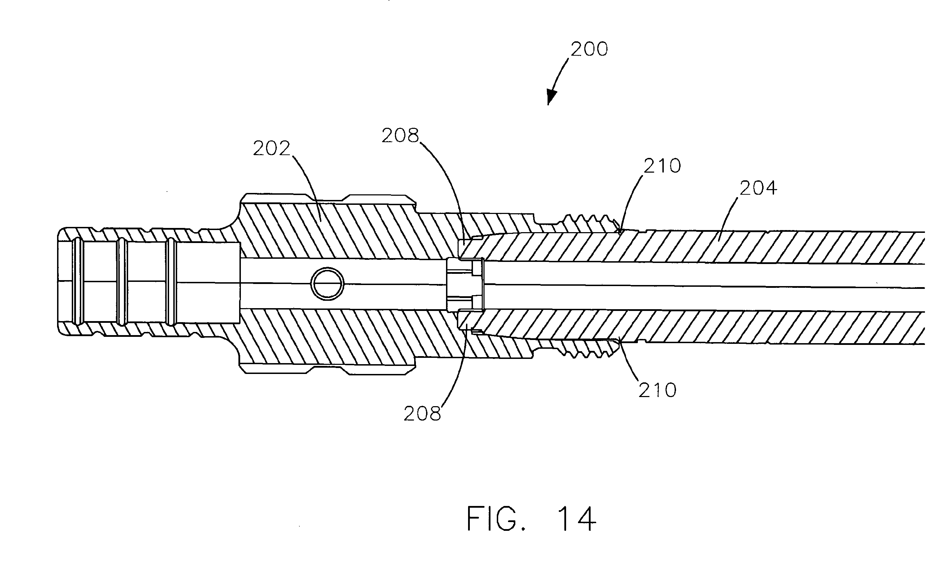

With the extensions 208 and the slotted spokes 206, the conductor tube 204 is adapted for rotational engagement with the adapter 202 such that the conductor tube 204 can be repositioned relative to the handle 12 of the welding gun 10. More specifically, the two (2) extensions 208 of the conductor tube 204 engage two (2) corresponding slotted spokes 206 of the adapter 202 to position the conductor tube 204 relative to the handle 12, as shown in FIG. 14. If an operator desires to change the position of the conductor tube 204, the extensions 208 are disengaged from the slotted spokes 206, the conductor tube 204 is rotated to the desired position, and the extensions 208 are engaged with a different set of corresponding slotted spokes 206. As illustrated herein, six (6) slotted spokes 206 are disposed within the adapter 202, and as such, the conductor tube 204 is repositionable to six (6) different positions. It should be understood that a fewer or greater number of slotted spokes 206 may be employed while remaining within the scope of the present disclosure, and thus the exemplary embodiment with six (6) slotted spokes 206 should not be construed as limiting the scope of the present disclosure.

Referring to FIG. 14, the conductor tube 204 also includes an outwardly extending angled flange 210 for engaging and sealing an interface between the conductor tube 204 and the adapter 202, similar to the conductor tube 102 as previously described. Additional features of the previous splined attachment device, such as the locking collar 106 by way of example, may be employed with this attachment device 200 while remaining within the scope of the present disclosure and are not illustrated and described with respect to this exemplary embodiment for purposes of clarity.

The adapters and the conductor tubes as illustrated and described herein may generally be referred to as socket members and plug members since the features on each of the different adapters 104, 202, and the conductor tubes 102, 204 as illustrated herein (e.g., grooves 120 and teeth 116, extensions 208, slotted spokes 206) may be employed on either the adapters 104, 202, or the conductor tubes 102, 104, whether on interior or exterior surfaces thereof. For example, a socket member defines a plurality of radially spaced receiving portions, and a plug member is disposed adjacent the socket member and defines at least one extension. The plurality of radially spaced receiving portions are adapted for engagement by the extension of the plug member such that the plug member and the socket member are repositionable relative to the handle of the welding gun. In one form, the socket member is an adapter disposed proximate the handle of the welding gun. In another form, the socket member is a conductor tube. Further yet, in another form, the plug member is an adapter disposed proximate the handle of the welding gun, and in still another form, the plug member is a conductor tube.

## Claims

1. A conductor tube (204) for use in a welding gun (10) comprising at least one of:
at least one extension (208) and radially spaced receiving portions (206),
wherein the extension (208) and the radially spaced receiving portions (206) are disposed near a proximal end portion (210) of the conductor tube (204), and the extension (208) and the radially spaced receiving portions (206) of the conductor tube (204) are adapted for rotational engagement with corresponding portions of an adapter (202) such that the conductor tube (204) can be repositioned relative to a handle (12) of the welding gun (10).

2. The conductor tube (204) according to Claim 1,
wherein the at least one extension (208) comprises a plurality of teeth (116) to define a splined attachment area (114) disposed around the proximal end portion, wherein the splined attachment area (114) is adapted for rotational engagement with the receiving portions of the adapter (202).

3. The conductor tube (204) according to Claim 1,
wherein the at least one extension comprises two radially opposed extensions (208) that are adapted for rotational engagement with the receiving portions (206) of the adapter.

4. The conductor tube (204) according to Claim 1,
wherein the conductor tube (204) further comprises an outwardly extending angled flange (210) for engaging and sealing an interface between the conductor tube (204) and the adapter (202).

5. The conductor tube (204) according to Claim 1,
wherein the radially spaced receiving portions define slotted spokes (206).

6. The conductor tube (204) according to Claim 1,
wherein the radially spaced receiving portions define grooves (120).

7. The conductor tube (204) according to Claim 1,
wherein the welding gun (10) comprises an adapter (202) disposed proximate a distal end portion of the handle (12), the adapter (202) defining a plurality of radially spaced receiving portions;
wherein the conductor tube (204) is disposed adjacent the adapter (202), and
wherein the plurality of radially spaced receiving portions (206) are adapted for engagement by the extension (208) of the conductor tube (204) such that the conductor tube (204) can be repositioned relative to the handle (12) of the welding gun (10).

8. The conductor tube (204) according to Claim 7,
wherein the radially spaced receiving portions (206) define grooves (120) and the at least one extension (208) comprises a plurality of teeth (116).

9. The conductor tube (204) according to Claim 7,
wherein the radially spaced receiving portions (206) define slotted spokes (206) and the at least one extension comprises two radially opposed extensions (208).

10. The conductor tube (204) according to Claim 7
wherein the welding gun (10) further comprises a locking collar (106) slidably disposed around the conductor tube (204), the locking collar (106) adapted for engagement with the adapter (202).

11. The conductor tube (204) according to Claim 7,
wherein the welding gun (10) further comprises a locking collar (106) slidably disposed around the conductor tube (204), and
wherein the adapter (202) defines a bore extending therethrough and an attachment area, the attachment area comprising:
radially spaced receiving portions disposed within an internal portion of the adapter; and
a threaded interface disposed around an external portion of the adapter (202), the threaded interface adapted for engagement with internal threads of the locking collar.

12. The conductor tube (204) according to Claim 11
wherein the welding gun (10) further comprises an insert (126) disposed within the locking collar (106), the insert (126) comprising the internal threads (122).

13. The conductor tube (204) according to Claim 11
wherein the welding gun (10) further comprises a clip element (128) disposed within the locking collar (106) to secure the insert (126) within the locking collar (106).

14. The conductor tube (204) according to Claim 11,
wherein the locking collar (106) defines a tapered configuration and a plurality of external gripping features.

15. The conductor tube (204) according to Claim 11,
wherein the conductor tube (204) further comprises an outwardly extending angled flange (140, 210) for engaging and sealing an interface between the conductor tube (204) and the adapter (202), and
wherein the adapter (202) further comprises an internal bevel (142) for engaging the outwardly extending angled flange (140, 210) of the conductor tube (204).

## Patentansprüche

1. Leitungsrohr (204) zur Verwendung in einer Schweißpistole (10), mindestens eines des Folgenden aufweisend:
mindestens eine Verlängerung (208) und radial im Abstand angeordnete, aufnehmende Abschnitte (206),
wobei die Verlängerung (208) und die radial im Abstand angeordneten, aufnehmenden Abschnitte (206) nahe einem proximalen Endabschnitt (210) des Leitungsrohrs (204) angeordnet sind und die Verlängerung (208) und die radial im Abstand angeordneten, aufnehmenden Abschnitte (206) des Leitungsrohrs (204) für einen drehenden Eingriff in entsprechende Abschnitte eines Anpassstücks (202) in einer Weise angepasst sind, dass das Leitungsrohr (204) relativ zu einem Griff (12) der Schweißpistole (10) neu positioniert werden kann.

2. Leitungsrohr (204) nach Anspruch 1, wobei die mindestens eine Verlängerung (208) eine Vielzahl von Zähnen (116) aufweist, um einen um den proximalen Endabschnitt herum angeordneten, kerbverzahnten Befestigungsbereich (114) festzulegen, wobei der kerbverzahnte Befestigungsbereich (114) für einen drehenden Eingriff in die aufnehmenden Abschnitte des Anpassstücks (202) angepasst ist.

3. Leitungsrohr (204) nach Anspruch 1, wobei die mindestens eine Verlängerung zwei radial gegenüberstehende Verlängerungen (208) aufweist, die für einen drehenden Eingriff in die aufnehmenden Abschnitte (206) des Anpassstücks angepasst sind.

4. Leitungsrohr (204) nach Anspruch 1, wobei das Leitungsrohr (204) ferner einen sich auswärts erstreckenden, gewinkelten Flansch (210) zum Ergreifen und Abdichten eines Übergangsbereichs zwischen dem Leitungsrohr (204) und dem Anpassstück (202) aufweist.

5. Leitungsrohr (204) nach Anspruch 1, wobei die radial im Abstand angeordneten, aufnehmenden Abschnitte geschlitzte Speichen (206) festlegen.

6. Leitungsrohr (204) nach Anspruch 1, wobei die radial im Abstand angeordneten, aufnehmenden Abschnitte Rillen (120) festlegen.

7. Leitungsrohr (204) nach Anspruch 1, wobei die Schweißpistole (10) ein nahe einem distalen Endabschnitt des Griffs (12) angeordnetes Anpassstück (202) aufweist, wobei das Anpassstück (202) eine Vielzahl von radial im Abstand angeordneten, aufnehmenden Abschnitten festlegt;
wobei das Leitungsrohr (204) an das Anpassstück (202) angrenzend angeordnet ist und
wobei die Vielzahl der radial im Abstand angeordneten, aufnehmenden Abschnitte (206) für einen Eingriff durch die Verlängerung (208) des Leitungsrohrs (204) in einer Weise angepasst ist, dass das Leitungsrohr (204) relativ zum Griff (12) der Schweißpistole (10) neu positioniert werden kann.

8. Leitungsrohr (204) nach Anspruch 7, wobei die radial im Abstand angeordneten, aufnehmenden Abschnitte (206) Rillen (120) festlegen und die mindestens eine Verlängerung (208) eine Vielzahl von Zähnen (116) aufweist.

9. Leitungsrohr (204) nach Anspruch 7, wobei die radial im Abstand angeordneten, aufnehmenden Abschnitte (206) geschlitzte Speichen (206) festlegen und die mindestens eine Verlängerung zwei radial gegenüberstehende Verlängerungen (208) aufweist.

10. Leitungsrohr (204) nach Anspruch 7, wobei die Schweißpistole (10) ferner einen gleitfähig um das Leitungsrohr (204) herum angeordneten, sperrenden Bund (106) aufweist, wobei der sperrende Bund (106) für einen Eingriff in das Anpassstück (202) angepasst ist.

11. Leitungsrohr (204) nach Anspruch 7, wobei die Schweißpistole (10) ferner einen gleitfähig um das Leitungsrohr (204) herum angeordneten, sperrenden Bund (106) aufweist und
wobei das Anpassstück (202) eine dort hindurch verlaufende Bohrung und einen Befestigungsbereich festlegt, wobei der Befestigungsbereich aufweist:
radial im Abstand angeordnete, aufnehmende Abschnitte, die innerhalb eines inneren Abschnitts des Anpassstücks angeordnet sind; und
einen mit Gewinde versehenen Übergangsbereich, der um einen äußeren Abschnitt des Anpassstücks (202) herum angeordnet ist, wobei der mit Gewinde versehene Übergangsbereich für einen Eingriff in Innengewinde des sperrenden Bundes angepasst ist.

12. Leitungsrohr (204) nach Anspruch 11, wobei die Schweißpistole (10) ferner einen innerhalb des sperrenden Bundes (106) angeordneten Einsatz (126) aufweist, wobei der Einsatz (126) die Innengewinde (122) aufweist.

13. Leitungsrohr (204) nach Anspruch 11, wobei die Schweißpistole (10) ferner ein innerhalb des sperrenden Bundes (106) angeordnetes Klemmelement (128) aufweist, um den Einsatz (126) innerhalb des sperrenden Bundes (106) zu sichern.

14. Leitungsrohr (204) nach Anspruch 11, wobei der sperrende Bund (106) einen konischen Aufbau und eine Vielzahl äußerer Greifstrukturen aufweist.

15. Leitungsrohr (204) nach Anspruch 11, wobei das Leitungsrohr (204) ferner einen sich auswärts erstreckenden, gewinkelten Flansch (140, 210) zum Ergreifen und Abdichten eines Übergangsbereichs zwischen dem Leitungsrohr (204) und dem Anpassstück (202) aufweist und
wobei das Anpassstück (202) ferner eine innere Abschrägung (142) zum Ergreifen des sich auswärts erstreckenden, gewinkelten Flansches (140, 210) des Leitungsrohrs (204) aufweist.

## Revendications

1. Tube conducteur (204) destiné à être utilisé dans un pistolet de soudage (10) comprenant au moins une de:
au moins une prolongation (208) et des parties réceptrices espacées radialement (206);
dans lequel la prolongation (208) et les parties réceptrices espacées radialement (206) sont disposées près d'une partie d'extrémité proximale (210) du tube conducteur (204), et dans lequel la prolongation (208) et les parties réceptrices espacées radialement (206) du tube conducteur (204) sont conçues pour s'engager en rotation avec des parties correspondantes d'un adaptateur (202), de telle sorte que le tube conducteur (204) puisse être repositionné par rapport à une poignée (12) du pistolet de soudage (10).

2. Tube conducteur (204) selon la Revendication 1, dans lequel la au moins une prolongation (208) comprend une pluralité de dents (116) pour définir une zone de fixation cannelée (114) disposée autour de la partie d'extrémité proximale, dans lequel la zone de fixation cannelée (114) est conçue pour s'engager en rotation avec les parties réceptrices de l'adaptateur (202).

3. Tube conducteur (204) selon la Revendication 1, dans lequel la au moins une prolongation comprend deux prolongations radialement opposées (208) conçues pour s'engager en rotation avec les parties réceptrices (206) de l'adaptateur.

4. Tube conducteur (204) selon la Revendication 1, dans lequel le tube conducteur (204) comprend, en outre, une bride coudée s'étendant vers l'extérieur (210) pour s'engager dans une interface entre le tube conducteur (204) et l'adaptateur (202) et l'obturer hermétiquement.

5. Tube conducteur (204) selon la Revendication 1, dans lequel les parties réceptrices radialement espacées définissent des rayons à fentes (206).

6. Tube conducteur (204) selon la Revendication 1, dans lequel les parties réceptrices radialement espacées définissent des rainures (120).

7. Tube conducteur (204) selon la Revendication 1, dans lequel le pistolet de soudage (10) comprend un adaptateur (202) disposé à proximité d'une partie d'extrémité distale de la poignée (12), l'adaptateur (202) définissant une pluralité de parties réceptrices radialement espacées;
dans lequel le tube conducteur (204) est disposé au voisinage immédiat de l'adaptateur (202), et
dans lequel la pluralité de parties réceptrices radialement espacées (206) est conçue pour s'engager par la prolongation (208) du tube conducteur (204), de sorte que le tube conducteur (204) puisse être repositionné par rapport à la poignée (12) du pistolet de soudage (10).

8. Tube conducteur (204) selon la Revendication 7, dans lequel les parties réceptrices radialement espacées (206) définissent des rainures (120) et dans lequel la au moins une prolongation (208) comprend une pluralité de dents (116) .

9. Tube conducteur (204) selon la Revendication 7, dans lequel les parties réceptrices radialement espacées (206) définissent des rayons à fentes (206) et dans lequel la au moins une prolongation comprend deux prolongations radialement opposées (208).

10. Tube conducteur (204) selon la Revendication 7, dans lequel le pistolet de soudage (10) comprend, en outre, un collier de verrouillage (106) disposé en coulissement autour du tube conducteur (204), le collier de verrouillage (106) étant conçu pour s'engager avec l'adaptateur (202).

11. Tube conducteur (204) selon la Revendication 7, dans lequel le pistolet de soudage (10) comprend, en outre, un collier de verrouillage (106) disposé en coulissement autour du tube conducteur (204), et
dans lequel l'adaptateur (202) définit un alésage s'étendant à travers et une zone de fixation, la zone de fixation comprenant:
des parties réceptrices radialement espacées, disposées à l'intérieur d'une partie interne de l'adaptateur; et
une interface filetée disposée autour d'une partie externe de l'adaptateur (202), l'interface filetée étant conçue pour s'engager avec des filets internes du collier de verrouillage.

12. Tube conducteur (204) selon la Revendication 11, dans lequel le pistolet de soudage (10) comprend, en outre, un insert (126) disposé à l'intérieur du collier de verrouillage (106), l'insert (126) comprenant les filets internes (122).

13. Tube conducteur (204) selon la Revendication 11, dans lequel le pistolet de soudage (10) comprend, en outre, un élément de clipsage (128) disposé à l'intérieur du collier de verrouillage (106) pour sécuriser l'insert (126) à l'intérieur du collier de verrouillage (106).

14. Tube conducteur (204) selon la Revendication 11, dans lequel le collier de verrouillage (106) définit une configuration conique et une pluralité de fonctions de préhension externes.

15. Tube conducteur (204) selon la Revendication 11, dans lequel le tube conducteur (204) comprend, en outre, une bride coudée s'étendant vers l'extérieur (140, 210) pour s'engager dans une interface entre le tube conducteur (204) et l'adaptateur (202) et l'obturer hermétiquement, et
dans lequel l'adaptateur (202) comprend, en outre, un chanfrein interne (142) conçu pour s'engager dans la bride coudée s'étendant extérieurement (140, 210) du tube conducteur (204).
